# EUROPÄISCHE PATENTANMELDUNG

(11) **EP 1 400 439 A2**
(43) Veröffentlichungstag der Anmeldung: **24.03.2004**
(21) Anmeldenummer: 03021064.5
(22) Anmeldetag: 18.09.2003
(51) Int. Cl.: B62K 3/00

(54) **Fahrzeug, insbesondere auch Sport- oder Funsportgerät**

(30) Priorität: 20.09.2002 DE 20214617 U; 08.10.2002 DE 20215426 U; 31.01.2003 DE 20301577 U
(71) Anmelder: Kroher, Karl, D-92711 Parkstein (DE)
(72) Erfinder: Kroher, Karl, D-92711 Parkstein (DE)
(74) Vertreter: Graf, Helmut, Dipl.-Ing.

(57) **Zusammenfassung**

Fahrzeug, insbesondere auch als Sport- oder Funsportgerät, mit wenigstens drei Rädern, mit einem Fahrzeugrahmen (2), mit einer lenkbaren Gabel (4) vorgesehenen vorderen Radachse (6) mit einem vorderen Rad (4) und mit einer an einer Rückseite des Rahmens (2) vorgesehenen rückwärtigen Radachse (11) mit zwei rückwärtigen Rädern (14).

## Beschreibung

Die Erfindung bezieht sich auf ein Fahrzeug gemäß Oberbegriff Patentanspruch 1.

Aufgabe der Erfindung ist es, ein dreirädriges Fahrzeug aufzuzeigen, welches als Grundeinheit für unterschiedlichste Zwecke verwendet werden kann, insbesondere im Sport- und Funbereich.

Zur Lösung dieser Aufgabe ist ein Fahrzeug entsprechend dem Patentanspruch 1.

Weiterbildungen sind Gegenstand der Unteransprüche. Die Erfindung wird im Folgenden anhand der Figuren an einem Ausführungsbeispiel näher erläutert. Es zeigen.

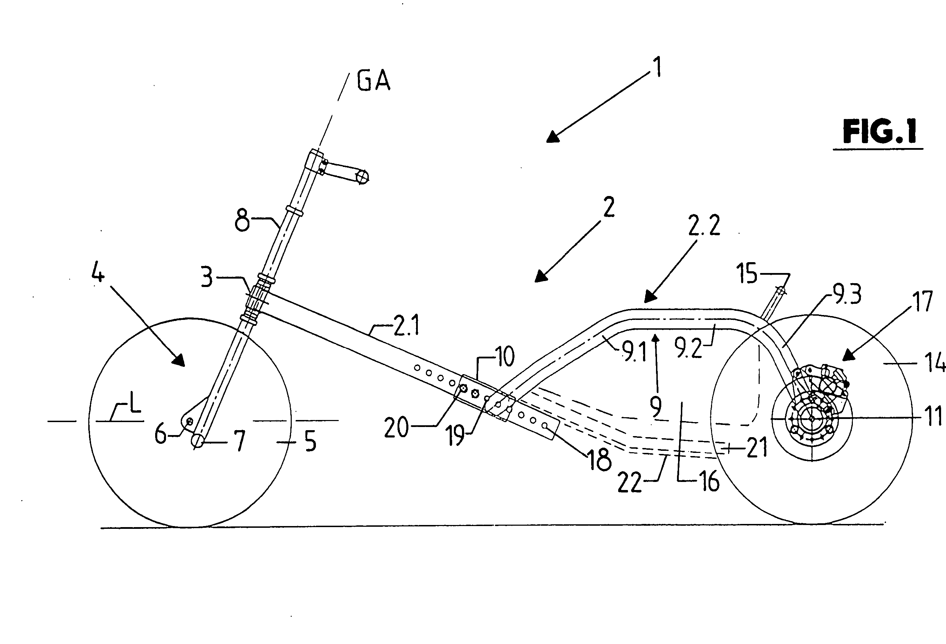

- Fig. 1: ein dreirädriges Fahrzeug gemäß der Erfindung in Seitenansicht;

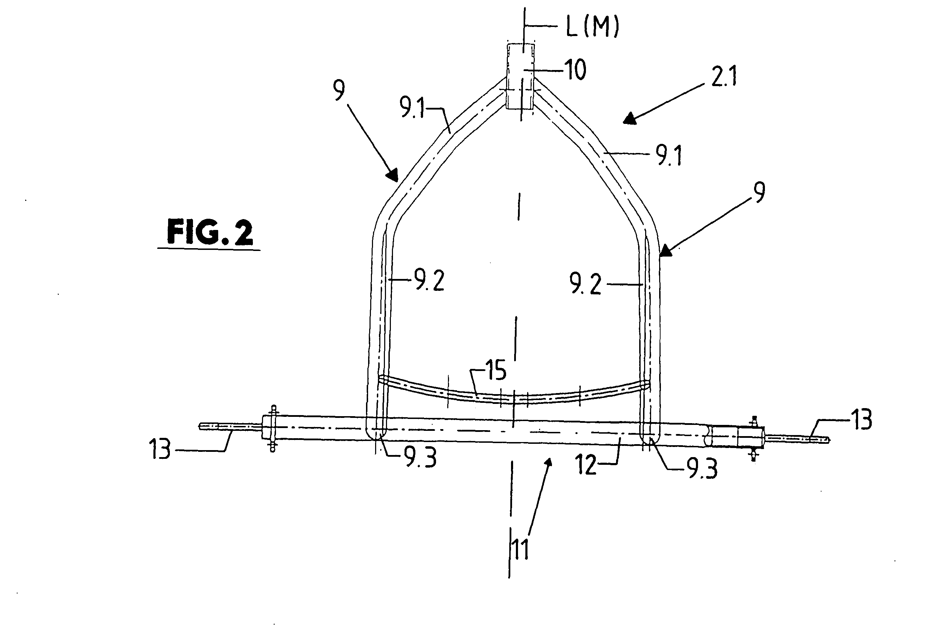

- Fig. 2: den rückwärtigen Teil des Fahrzeugrahmens in Draufsicht, zusammen mit der an diesem Rahmenteil vorgesehenen starren Hinterachse;
- Fig. 3: in sehr vereinfachter perspektivischer Darstellung einen an den Rahmen des Fahrzeugs bzw. an die rückwärtige Achse angeflanschten motorischen Antrieb mit eigenem Antriebsrad;
- Fig. 4: in vereinfachter Darstellung eine Draufsicht bei einer weiteren möglichen Ausführungsform der Erfindung, zusammen mit einem an dem Lenker angelenkten Haken-Hebel zum Befestigen an einem Lift-Bügel;
- Fig. 5: den Haken-Hebel in Seitenansicht.

Das in den Figuren allgemein mit 1 bezeichnete Fahrzeug ist als Grundeinheit für die unterschiedlichsten Anwendungen speziell auch im Sport- oder Funsportbereich geeignet, beispielsweise als Downhillsportgerät oder -fahrzeug, als Land- oder Straßenfahrzeug mit einem geeigneten Antrieb, beispielsweise mit Propeller- oder Luftschraubenabtrieb oder mit einem Antrieb durch einen Zugdrachen oder ein Segel. Das Fahrzeug kann im Gelände, auf Wegen und Straßen, aber auch im Winter auf verschneiten Flächen oder Eisflächen eingesetzt werden, und zwar in den beiden letzteren Fällen dann insbesondere mit einer speziellen, beispielsweise Spikes aufweisenden Bereifung, oder mit Gleitkufen oder-brettern (Ski) oder dergleichen.

Das Fahrzeug 1 besteht im wesentlichen aus einem zweiteiligen Rahmen 2 mit den beiden Rahmenteilen 2.1 und 2.2, die in Fahrzeuglängsrichtung L aneinander anschließen und etwa in der Fahrzeugmitte in Fahrzeuglängsrichtung verstellbar miteinander verbunden sind.

Das vordere Rahmenteil 2.1 besteht im wesentlichen aus einem Holm oder aus einer geradlinigen Länge eines Rohrprofils, beispielsweise eines Rechteck-Rohrprofils. An dem in Fahrtrichtung vorderen Ende des Rahmenteils 2.1 ist eine Lagerung 3 für die Fahrzeuggabel 4 vorgesehen, an der das vordere Rad 5 des dreirädrigen Fahrzeugs 1 drehbar gelagert ist, und zwar mittels einer vorderen Radachse 6. An der Gabel 4 sind weiterhin zwei Fußstützen 7, die jeweils parallel zu der Radachse 6 von der Gabel 4 nach entgegengesetzten Seiten wegstehen sowie auch ein Vorderradschutzblech vorgesehen.

An der Radgabel 4 ist in der üblichen Form auch ein Lenker 8 befestigt, und zwar vorzugsweise höhenverstellbar und/oder in der Neigung verstellbar. Mit Hilfe der Fußstütze 7 ist ein Lenken des Fahrzeugs 1 mit den Füßen möglich. Mit Hilfe des Lenkers 8 ist ein manuelles Lenken des Fahrzeugs 1 möglich. Wie dargestellt, ist die Achse GA der Gabel 4, um die diese Gabel zum Lenken in dem Lager 3 drehbar gelagert ist, gegenüber der Vertikalen geneigt, so daß diese Achse GA, die in einer gemeinsamen vertikalen Mittelebene mit der Längsachse L liegt, mit der Vertikalen einen Winkel kleiner 90° einschließt, der sich zur Rückseite des Fahrzeugs 1 bzw. zum rückwärtigen Rahmenteil 2.2 hin öffnet.

Das rückwärtige Rahmenteil 2.2 ist ebenfalls aus Längen eines Rohrprofils hergestellt, und zwar mit zwei seitlichen Rahmenelementen 9. Diese sind wiederaum aus einem Rohrprofil durch Biegen hergestellt, und zwar jeweils im wesentlichen mit drei Abschnitte 9.1, 9.2 und 9.3. Mit einem vorderen, der Rahmenmitte näherliegenden Abschnitt 9.1 sind Rahmenelemente 9 mit einer Verbindungshülse 10 verbunden, die mit ihrer Achse in der die Längsachse L einschließenden vertikalen Mittelebene des Fahrzeugs liegt. Ausgehend von dieser Verbindungshülse 10 laufen die beiden Abschnitte 9.1 in Draufsicht auf den Rahmen 2 divergierend auseinander und zugleich in seitenansicht des Rahmens 2 schräg nach oben. An jeden Abschnitt 9.1 schließt sich ein Abschnitt 9.2 an. Diese verlaufen parallel und im Abstand zueinander sowie parallel zur Längsachse L.

An die horizontalen oder im wesentlichen horizontalen Abschnitte 9.2 schließt sich an der Rückseite des Fahrzeugs 1 jeweils ein nach unten verlaufender Abschnitt 9.3 an, mit dem das jeweilige Rahmenelement an einem die rückwärtige Radachse 11 bildenden Achsrohr 12 befestigt ist. Das Achsrohr 12 steht beidendig über die Rahmenelemente 9 vor und ist an seinem Ende jeweils mit einem Achsbolzen 13 versehen, auf dem jeweils ein rückwärtiges Rad 14 frei drehbar gelagert ist.

Im Bereich der Rückseite des Fahrzeugs 1 sind die beiden Rahmenelemente 9 bzw. deren Abschnitte 9.2 durch einen über die Oberseite der Rahmenelemente 9 vorstehenden und eine Rückenstütze bildenden Bügel 15 miteinander verbunden.

Zwischen den beiden Rahmenelementen 9 ist ein von einem geeigneten Flachmaterial (z.B. Gewebe) gebildeter Sitz eingehängt, auf dem der Benutzer des Fahrzeugs 1 derart Platz findet, daß er sich mit seinen Füßen auf jeweils einer Fußauflage 7 abstützen kann, und zwar mit dem von dem Rahmenteil 2.1 gebildeten Holm zwischen den beiden Beinen des Benutzers. Mit dem Rücken kann sich der Benutzer an dem Bügel 15 abstützen.

Durch den auch zur Mittelebene M schrägen Verlauf der Rahmenabschnitt 9.1 wirken diese als Abweiser bzw. als zusätzlicher Unfallschutz, d.h. sollte der Benutzer des Fahrzeugs 1 beim Fahren unbeabsichtigt einen oder beide Füße auf den Untergrund aufstellen, so wird das betreffende Bein durch den schrägen Verlauf der Rahmenabschnitte 9.1 seitlich nach außen bewegt und gelangt somit nicht unter den Fahrzeugrahmen, was zu Verletzungen führen könnte.

Die rückwärtige Radachse 11 bzw. die dortigen Räder 14 sowie das Vorderrad sind jeweils mit einer Bremse 17 versehen, die bei der dargestellten Ausführungsform als Scheibenbremse ausgebildet ist und manuell, beispielsweise durch eine nicht dargestellten Griff an dem Lenker 8 bedient werden kann.

Um die Länge des Fahrzeugs 1 an die Körpergröße des Benutzers anpassen zu können, sind die beiden Rahmenteile 2.1 und 2.2 in Fahrzeuglängsrichtung verstellbar aneinander befestigt, und zwar dadurch, daß das mit dem Rahmenteil 2.1 zu verbindende Ende des Rahmenteils 2.1 in der Verbindungshülse 10 axial verschiebbar ist und eine Vielzahl von Bohrungen 18 aufweist, denen Bohrungen 19 in der Verbindungshülse 10 entsprechen, so daß unter Verwendung von Schrauben oder Gewindebolzen 20 das Einstellen und Fixieren der Fahrzeuglänge möglich ist.

Das beschriebene Fahrzeug zeichnet sich durch einen besonders tiefen Schwerpunkt aus, und zwar bei einem relativ großen Radabstand zwischen den hinteren Rädern 14, so daß ein sicheres Fahren, insbesondere auch in unebenen Gelände gegeben ist. Der tiefe Schwerpunkt wird insbesondere auch dadurch erreicht, daß sich die vom Sitz 16 gebildete Sitzfläche im wesentlichen unterhalb des rückwärtigen Rahmenteils 2.2 bzw. des Abschnittes 9.1 der dieses Rahmenteil bildenden Rahmenelemente 9 liegt.

Die Räder 4 und 14 sind vorzugsweise solche bestehend aus Felgen und einer Luftbereifung. Das sichere Fahren wird auch durch den relativ großen Durchmesser der Räder erreicht, wobei die von dem Sitz 16 gebildete Sitzfläche auf dem Niveau der Radachsen 6 und 11 oder tiefer liegt, also auch deutlich tiefer liegt als die Oberseite der Räder 4 und 14.

Bei der dargestellten Ausführungsform sind die Lager für die rückwärtigen Räder 14 beispielsweise mit einem Kugel-Freilauf derart ausgebildet, daß sich eine Rücklaufsperre ergibt, die beispielsweise für einen Liftbetrieb ein unerwünschtes Rückwärtsrollen des Fahrzeugs verhindert. Die Rücklaufsperre ist beispielsweise so ausgebildet, daß sie zu- und abgeschaltet werden kann. Anstelle von als Kugel-Freilauf ausgebildeten Rücklaufsperren können auch andere Rücklaufsperren, beispielsweise solche mit gefederten Klinken usw. verwendet werden.

Mit 21 ist in der Figur ein Unterbügel bezeichnet, der am rückwärtigen Rahmenteil 2.2 unterhalb des Sitzes vorgesehen ist und den Benutzer des Fahrzeugs vor Verletzungen durch Bodenunebenheiten und Steine zuverlässig schützt. An dem Unterschutzbügel, der beispielsweise ähnlich dem Rahmenelementen 9 zweifach vorgesehen ist, ist weiterhin ein Unterschutzblech 22 vorgesehen.

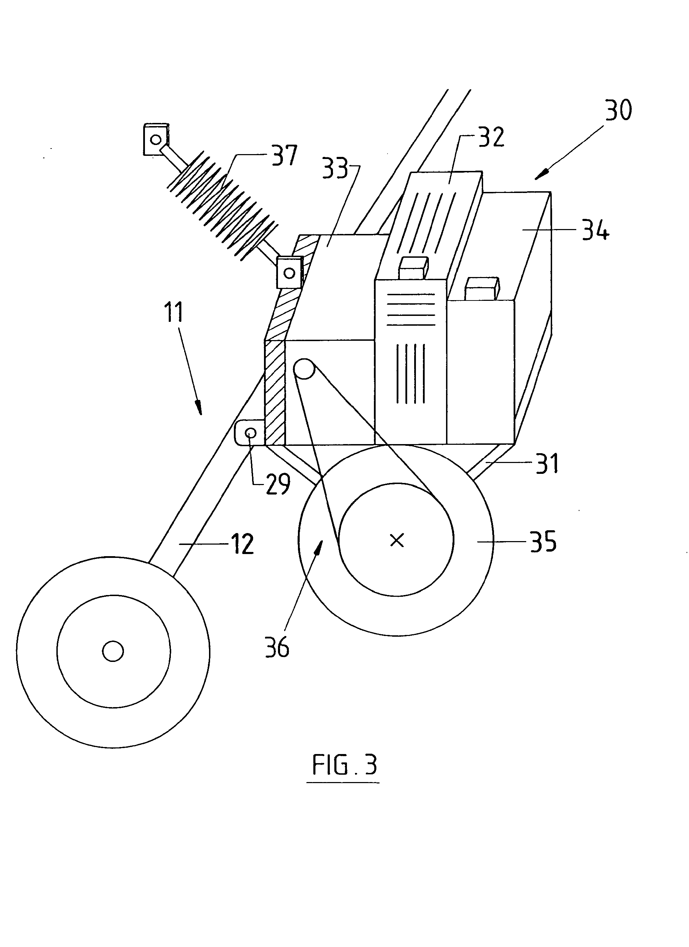

Die Figur 3 zeigt nochmals sehr schematisch die rückwärtige Achse 11 des Fahrzeugs 1 bzw. das Achsrohr 12 dieser Achse, zusammen mit einem der beiden rückwärtigen Räder 14. An dem Achsrohr 12 ist bei 29 ein motorischer Antrieb 30 angeflanscht, und zwar derart, daß dieser Antrieb 30 über die rückwärtige Radachse 11 und die Rückseite des Fahrzeugs 1 wegsteht und im angeflanschten Zustand um eine Achse parallel zur Achse 11 schwenkbar ist.

Der Antrieb 30 besteht bei der dargestellten Ausführungsform aus einem Hilfsrahmen 31, der schwenkbar mit der rückwärtigen Achse 11 verbunden ist und auf dem ein Verbrennungsmotor 32 (z. B. Benzinmotor) und zugehörige Aggregate wie Getriebe 33, Tank 34 usw. vorgesehen sind. An dem Hilfsrahmen 31 ist um eine Achse parallel zur Achse 11 ein einziges Rad 35 drehbar gelagert, welches beispielsweise in gleicher Weise wie die Räder 14 ausgeführt ist. Das Rad 37 ist über einen Ketten- oder Riemenantrieb 36 mit der Ausgangswelle des Motors bzw. des Getriebes 33 antriebsmäßig verbunden.

Im Verwendungsfall steht das Rad 35 mit dem Gewicht des Antriebs 30 auf dem Untergrund auf, so daß bei umlaufendem Motor 32 über das Antriebsrad 35 das Fahrzeug 1 motorisch fortbewegt wird. Mit 37 ist eine Feder- und Dämpfereinheit bezeichnet, die zwischen dem Antrieb 30 und einem Element des Rahmens des Fahrzeuges 1 wirkt, beispielsweise zwischen dem Antrieb 30 und dem Bügel 15. Durch die Anordnung 37 wird der Anpreßdruck des Rades 35 gegen den Untergrund erhöht. Weiterhin wird durch die Anordnung 37 verhindert, daß beim Fahren durch unebenes Gelände der Antrieb 30 unkontrolliert um seinen Anlenkpunkt 29 schwenkt.

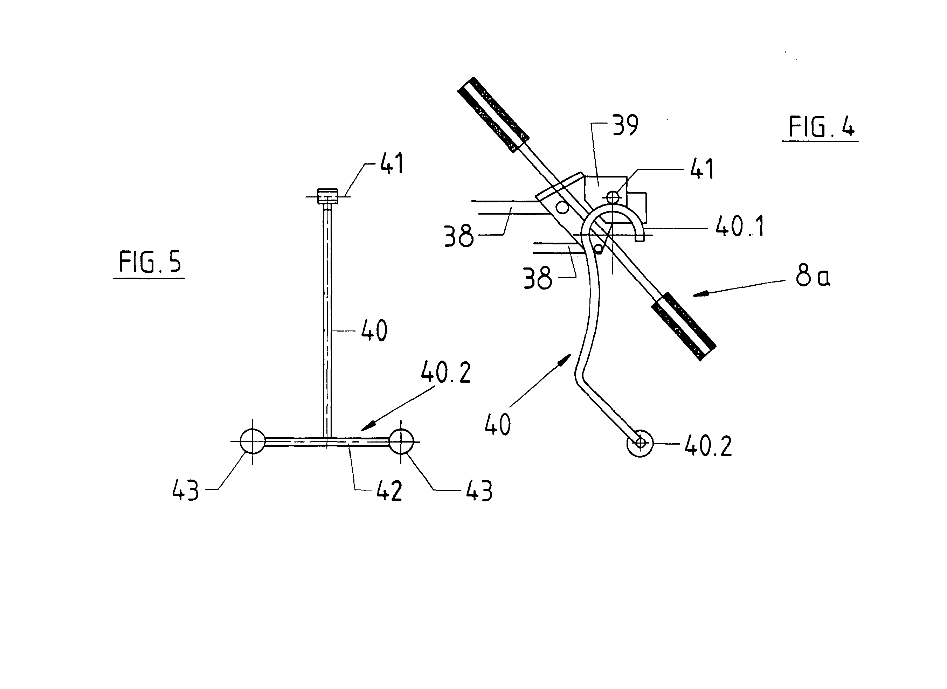

Die Figuren 4 und 5 zeigen einen Lenker 8a, der sich vom Lenker 8 dadurch unterscheidet, daß die Vorderradgabel bzw. die diese Gabel bildenden Radgabelelemente 38 bis an den Lenker 8a herangeführt und am oberen Ende mit einer Platte oder einem Steg 39 verbunden sind. An diesem Steg ist ein Bügel 40 mit einem einen Haken bildenden Ende 40.1 um eine Achse 41 parallel zu den Elementen 38 schwenkbar vorgesehen. Mit dem Ende 40.1, welches an der Vorderseite des Lenkers 8a angeordnet ist, kann das betreffende Fahrzeug an einem Bügel oder an einer Schlaufe eines Schleppliftes eingehängt werden. Das andere Ende 40.2 des Hebels 40 ist bei der dargestellten Ausführungsform von einer Stange 42 gebildet, die mit ihrer Längserstreckung senkrecht zur Längserstreckung des Hebels 40 orientiert und beidendig mit einem Knauf 43 versehen ist.

Die Verwendung des Hebels 40 erfolgt in der Weise, daß beim Benutzen eines Liftes (Skilift) ein Liftbügel oder eine Schlaufe an dem hakenförmigen Ende 40.1 eingehängt wird. Vom Benutzer des Fahrzeugs 1 wird dann der Hebel 40 in einer Stellung gehalten, in der die Verbindung zum Liftbügel bzw. zu der dortigen Schlaufe aufrechterhalten ist. Beim Verlassen des Liftes wird der Bügel 40 freigegeben, so daß dieser in eine Stellung schwenkt, in der der Liftbügel oder eine entsprechende Schlaufe selbsttätig von dem Hakenende 40.1 freikommt.

Die Erfindung wurde voranstehend an einem Ausführungsbeispiel beschrieben. Es versteht sich, daß Änderungen sowie Abwandlungen möglich sind, ohne daß dadurch der der Erfindung zugrundeliegende Erfindungsgedanke verlassen wird.

So ist es beispielsweise möglich, insbesondere das rückwärtige Rahmenteil 2.2 verlängert derart auszubilden, daß in diesem Rahmenteil bzw. in dort eingehängten Sitzen 16 zwei Personen hintereinander Platz finden. Weiterhin ist es auch möglich, anstelle der Räder 4 und 14 andere Elemente vorzusehen, die ein Fahren oder Gleiten auf einer Wasser-Schnee- oder Eissfläche ermöglicht, beispielsweise Schwimmer oder aber gleitbrettartige Elemente.

Weiterhin ist es möglich, die vordere Radgabel 4 und/oder die Hinterachse 11 gefedert auszuführen. Zur Verwendung als Downhillsportgerät weist das Fahrzeug 1 beispielsweise an der Vordergabel eine Aufnahme zum Einhängen eines Liftbügels auf. Weiterhin ist es möglich, das Fahrzeug 1 mit einem Überschlagschutz bzw. mit einem entsprechenden Schutzbügel zu versehen. Auch ist es möglich, zur Verbesserung der Stabilität für die Hinterräder einen Sturz vorzusehen. Anstelle der Verbindungshülse 10 oder aber zusätzlich zu dieser kann auch ein Klappmechanismus zwischen den beiden Rahmenteilen 2.1 und 2.2 vorgesehen sein, der dann im Nichtgebrauchszustand des Fahrzeugs 1 oder bei dessen Transport zur Reduzierung des Platzbedarfs ein Zusammenklappen des Fahrzeugs 1 ermöglicht. Weiterhin ist es möglich, das Fahrzeug 1 bzw. dessen Räder mit einer Rücklaufsperre, beispielsweise in Form eines Freilaufs zu versehen, um ein unerwünschtes Rückwärtsfahren im Gelände zu vermeiden.

Soll das Fahrzeug mittels Körperkraftantrieb betrieben werden, ist es möglich, am Fahrzeugrahmen zwei, beispielsweise an dem vorderen Rahmenteil 2.1 ein Tretlager mit Pedalen und einem Kettenrad vorzusehen, welch letzteres dann Bestandteil eines auf die rückwärtigen Räder 14 einwirkenden Kettengetriebes ist, beispielsweise eines Kettengetriebes mit Gangschaltung.

Es besteht weiterhin die Möglichkeit, anstelle der Räder 5 und 14 geeignete Schwimmkörper vorzusehen oder aber diese Räder gegen Schwimmkörper auszutauschen, so daß dann das Fahrzeug als Wasserfahrzeug auf einem Gewässer bewegt werden kann, und zwar beispielsweise mittels eines an dem Rahmen angeflanschten Bootsmotor oder mittels eines anderen geeigneten Antriebs.

### Bezugszeichenliste

- 1: Fahrzeug
- 2: Fahrzeugrahmen
- 2.1, 2.2: Rahmenteil
- 3: Lenklager
- 4: Vorderradgabel
- 5: vorderes Rad
- 6: vordere Radachse
- 7: Fußstütze
- 8, 8a: Lenker
- 9: Rahmenelement
- 9.1, 9.2, 9.3: Abschnitt des Rahmenelememtes
- 10: Verbindungshülse
- 11: rückwärtige Achse
- 12: Achsrohr
- 13: Achsbolzen
- 14: rückwärtiges Rad
- 15: Rückenstütze oder Bügel
- 16: Sitz
- 17: Bremse
- 18, 19: Loch oder Lochreihe
- 20: Verbindungsbolzen
- 21: Unterschutzbügel
- 22: Unterschutzblech
- 29: Anlenkung
- 30: Antrieb
- 31: Hilfsrahmen
- 32: Verbrennungsmotor
- 33: Getriebe
- 34: Tank
- 35: Antriebsrad
- 36: Ketten- oder Riemen*
- 37: Feder- und Dämpfungselement
- 38: Lenkerelemente oder Stangen
- 39: Platte oder Verbindungssteg
- 40: Hebel*
- 40.1: hakenförmiges Endes
- 40.2: Ende
- 42: Stange
- 43: Knauf

## Patentansprüche

1. Fahrzeug, insbesondere auch als Sport- oder Funsportgerät, mit wenigstens drei Rädern, mit einem Fahrzeugrahmen (2), mit einer an einer lenkbaren Gabel (4) vorgesehenen vorderen Radachse (6) mit wenigstens einem vorderen Rad (4) und mit einer an einer Rückseite des Rahmens (2) vorgesehenen rückwärtigen Radachse (11) mit zwei rückwärtigen Rädern (14), **dadurch gekennzeichnet,**
**daß** der Rahmen (2) von zwei in einer Fahrzeuglängsachse (L) aneinander anschließenden Rahmenteilen (2.1, 2.2) gebildet ist,
**daß** das rückwärtige Rahmenteil (2.2) zwei bügelartige Rahmenelemente (9) aufweist, die mit einem Ende an der rückwärtigen Radachse (11) oder an einem diese Radachse bildenden Achsrohr (12) befestigt und mit dem anderen Ende mit dem vorderen Rahmenteil (2.1) verbunden sind,
**daß** die beiden Rahmenelemente (9) so geformt sind, daß sie zwischen ihren Verbindungspunkt (10) mit dem vorderen Rahmenteil (2.1) und ihrem Verbindungspunkt mit der rückwärtigen Radachse (11) einen ersten Abschnitt (9.2) aufweisen, an dem die beiden Rahmenelemente senkrecht zur Längsachse des Fahrzeugs voneinander beabstandet sind und der deutlich über der Ebene der Radachsen (6, 11) liegt, und
**daß** zwischen den beiden Rahmenelementen (9) ein Fahrzeugsitz (16) mit einer Sitzfläche unterhalb des ersten Abschnittes (9.1) angeordnet ist,
**daß** die Rahmenelemente (9) jeweils einen weiteren Abschnitt (9.1) bilden, der ausgehend von der Verbindung zwischen den Rahmenteilen nach oben ansteigt und in dem ersten Abschnitt (9.2) übergeht, und
**daß** die Rahmenelemente (9) einen dritten Abschnitt (9.3) bilden, der ausgehend von dem ersten Abschnitt (9.2) nach unten zu der rückwärtigen Radachse (11) verläuft.

2. Fahrzeug nach Anspruch 1, **dadurch gekennzeichnet,**
**daß** die vordere Radachse ein Rad (5) aufweist, und/oder
**daß** zumindest ein Rad (14) wenigstens einer Radachse mit einer beispielsweise zuund wegschaltbaren Rücklaufsperre versehen ist.

3. Fahrzeug nach einem der vorhergehenden Ansprüche, **dadurch gekennzeichnet, daß** am rückwärtigen Rahmenteil (2.2) im Bereich der Sitzfläche wenigstens ein Unterschutzbügel und/oder ein Unterschutzblech vorgesehen ist.

4. Fahrzeug nach einem der vorhergehenden Ansprüche, **dadurch gekennzeichnet, daß** die beiden zweiten Abschnitte (9.1) der Rahmenelemente (9) ausgehend von der Verbindung (10) mit dem vorderen Rahmenteil (2.1) divergieren bzw. einen zunehmenden Abstand voneinander abweisen.

5. Fahrzeug nach einem der vorhergehenden Ansprüche, **dadurch gekennzeichnet, daß** die ersten und dritten Abschnitte (9.2, 9.3) jedes Rahmenelementes (9) jeweils in einer gemeinsamen Ebene, vorzugsweise in einer gemeinsamen Ebene parallel zu einer die Fahrzeuglängsachse (L) einschließenden und senkrecht zur rückwärtigen Radachse (11) verlaufenden Fahrzeugmittelebene (M) liegen.

6. Fahrzeug nach einem der vorhergehenden Ansprüche, **dadurch gekennzeichnet daß** das vordere Rahmenteil (1) von einem Holm gebildet,
wobei beispielsweise der das vordere Rahmenteil (2.1) bildende Holm geradlinig ausgebildet ist und mit seiner Längserstreckung in der vertikalen Mittelebene (M) liegt.

7. Fahrzeug nach einem der vorhergehenden Ansprüche, **dadurch gekennzeichnet, daß** ein am vorderen Rahmenteil (2.1) vorgesehenes Lager (3) für die Radgabel (4) in Fahrzeugseitenansicht oberhalb der Verbindung (10) zwischen den beiden Rahmenteilen (2.1, 2.2) liegt.

8. Fahrzeug nach einem der vorhergehenden Ansprüche, **dadurch gekennzeichnet, daß** am rückwärtigen Rahmenteil (2.2) eine Verbindungshülse (10) vorgesehen ist, die auf dem das vordere Rahmenteil (2.1) bildenden Holm in Längsrichtung verschiebbar vorgesehen ist.

9. Fahrzeug nach einem der vorhergehenden Ansprüche, **dadurch gekennzeichnet, daß** die Rahmenteile (2.1, 2.2) aus wenigstens einem Rohrprofil, beispielsweise aus Metall gefertigt sind,
und/oder
daß die Fahrzeugräder (4, 14) aus Felgen mit Luftbereifung bestehen,
und/oder
daß der Lenker (8) in der Höhe und/oder in der Neigung verstellbar ist,
und/oder
daß an der Fahrzeuggabel (4) ein Lenker (8) und/oder seitliche Fußstützen (7) vorgesehen sind,
und/oder
daß an dem vorderen Rad (4) und/oder an den rückwärtigen Rädern (14) eine Bremse (17) vorgesehen sind.

10. Fahrzeug nach einem der vorhergehenden Ansprüche, **gekennzeichnet durch** einen motorischen Antrieb (30), der am Fahrzeugrahmen (2), vorzugsweise an einer Hinterachse des Rahmens befestigt oder befestigbar ist und wenigstens ein von einem Antriebsmotor (32) angetriebenes Antriebsrad (35) aufweist,
wobei beispielsweise der Antrieb zusätzlich zu dem Motor (32) ein Getriebe (32, 36) aufweist und/oder der Antriebsmotor antriebsmäßig mit einem Rad des Fahrzeugs verbunden ist.

11. Fahrzeug nach einem der vorhergehenden Ansprüche, **dadurch gekennzeichnet, daß** an der Vorderseite des Fahrzeugrahmens, beispielsweise an einem Element (39) einer vorderen Radgabel ein Kupplungselement (40) zum Verbinden mit einem Skilift vorgesehen ist; wobei
das Kupplungselement beispielsweise ein schwenkbarer, an einem Ende einen Haken bildender Hebel (40) ist.

12. Fahrzeug nach einem der vorhergehenden Ansprüche, **dadurch gekennzeichnet, daß** die Räder des Fahrzeugs gegen Schwimmkörper austauschbar sind.
